# EUROPÄISCHE PATENTSCHRIFT

(11) **EP 1 458 601 B1**
(45) Veröffentlichungstag und Bekanntmachung des Hinweises auf die Patenterteilung: **21.09.2005**
(21) Anmeldenummer: 02795233.2
(22) Anmeldetag: 19.12.2002
(51) Int. Cl.: B60T 17/08

(54) **FESTSTELLBREMSVORRICHTUNG UND STEUERVERFAHREN**
PARKING BRAKE DEVICE AND CONTROL METHOD
SYSTEME DE FREIN DE PARKING ET PROCEDE DE COMMANDE

(30) Priorität: 20.12.2001 DE 10163144
(43) Veröffentlichungstag der Anmeldung: 22.09.2004
(73) Patentinhaber: KNORR-BREMSE SYSTEME FÜR NUTZFAHRZEUGE GMBH, 80809 München (DE)
(72) Erfinder: BAUMGARTNER, Johann, 85368 Moosburg (DE); PAHLE, Wolfgang, 74080 Heilbronn (DE); GANZHORN, Dirk, 80809 München (DE)
(74) Vertreter: Mattusch, Gundula
(86) Internationale Anmeldenummer: PCT/EP2002/014573
(87) Internationale Veröffentlichungsnummer: WO 2003/053759

(56) Entgegenhaltungen:
- EP-A- 0 364 977
- WO-A-96/12634
- WO-A-02/073058
- DE-A- 3 925 076
- DE-C- 19 623 099

## Beschreibung

Die Erfindung betrifft eine Feststellbremsvorrichtung nach dem Oberbegriff des Anspruchs 1 und ein Steuerverfahren für eine Feststellbremsvorrichtung.

Nach dem Stand der Technik werden zur Realisierung der Hilfs- und FeststellBremsfunktion pneumatisch betätigter Bremsen üblicherweise Federspeicher-Bremszylinder eingesetzt. Derartige Federspeicher-Bremszylinder (FBA-Zylinder) werden auf den Betriebs-Bremszylinder (BBA-Zylinder) aufgesetzt und übertragen die Betätigungskraft der Speicherfeder über ein Druckelement (Stirnfläche des Kolbenrohres) auf den (Membran-)Kolben des BBA-Zylinders und damit auf das jeweilige Betätigungsorgan der Bremse.

Zum Betrieb des Fahrzeuges wird das Betätigungsorgan der Bremse von dieser Federkraft entlastet, indem der zwischen Speicherfeder und BBA-Zylinder angeordnete Vorspannkolben so mit Druck beaufschlagt wird, daß er die Speicherfeder im Sinne eines Lösens der Bremse vom Kolben des BBA-Zylinders wegbewegt, die Speicherfeder dabei weiter vorspannt und während der Fahrt in diesem Zustand hält.

Zum Einlegen der Feststellbremse wird der Vorspannkolben durch Entlüften des zugehörigen Arbeitsraumes vom Druck entlastet und so die Kraft der Speicherfeder in der beschriebenen Weise zur Betätigung der Bremse wirksam gemacht. Mit einer geeigneten Ansteuerung kann dieser Entlüftungsvorgang auch abstufbar erfolgen, womit die Federspeicher-Bremse neben der Feststellbremsfunktion auch als Hilfsbremse eingesetzt werden kann.

Derartige Federspeicher-Bremszylinder arbeiten sehr zuverlässig, haben jedoch den Nachteil eines großen Bauraumbedarfes, eines hohen Gewichtes sowie hoher Kosten für den Federspeicher selbst sowie für die notwendige Druckversorgung und die pneumatische Ansteuerung.

Bei elektronisch geregelten Bremsanlagen ist es auf einfache Weise möglich, die Hilfsbremsfimktion über einen unabhängigen Regelkreis zu realisieren. Hierdurch wird es auch möglich, die Feststellbremsfunktion mit geringerem Aufwand, d.h. ohne Verwendung eines Federspeichers durchzuführen.

Typische Möglichkeiten sind:
a) eine mechanische Verriegelung des Fahrzeugrades oder der Antriebswelle bei stillstehendem Fahrzeug (siehe z.B. die DE 198 15 714 C2 und die DE 198 16 801 A1),
b) eine Verriegelung des Betätigungsorganes der Bremse im eingebremsten Zustand (siehe die EP 0 995 659 A1),
c) eine Verriegelung des Bremszylinders mittels Klinkensperre im eingebremsten Zustand (z.B. auf SAE Bus and Truck Meeting Oktober 1990 in Detroit ausgestellt),
d) eine Verriegelung des Bremszylinders mittels aufgesetzter Schraubspindel im eingebremsten Zustand (siehe z.B. die PCT/SE 00/1981).

Ein Nachteil der Lösung a) besteht darin, daß einem bei Abstellen des Fahrzeuges auf geneigter Fahrbahn die entstehende Handabtriebskraft auf die Verriegelung wirkt und infolge der auftretenden Reibung eine hohe Lösekraft erforderlich ist. Weiterhin kann der formschlüssige Verriegelungsvorgang nicht stufenlos erfolgen, so daß bei Einlegen der Feststellbremse die Verriegelungsposition erst nach einer Bewegung des Fahrzeugrades und damit des Fahrzeuges erfolgt.

Ein Nachteil der Lösungen b) bis d) liegt darin, daß bei einer Verriegelung des Betätigungsorganes der Bremse oder der Bremszylinderposition im eingebremsten Zustand kein Nachstellen der Bremse erfolgt. Dies ist besonders bei Scheibenbremsen erforderlich, um den Schrumpfungsvorgang an Bremsscheibe und Bremsbacken während des Abkühlvorganges einer heiß abgestellten Bremse auszugleichen.

Ein weiterer Nachteil der Lösung b) ist, daß sehr hohe Kräfte am Verriegelungsmechanismus wirksam werden und die notwendige Dimensionierung des Betätigungsmechanismus die Abmessung der Bremse vergrößert.

Die Lösung c) ermöglicht durch das Klinkensperren nur eine grobe Abstufung der Parkbremsstellung des Bremszylinders, wodurch keine optimale Haltewirkung der Feststellbremse gesichert ist.

Bei der Lösung d) wird zwar eine stufenlose Verriegelung des Bremszylinders erreicht, jedoch ergibt sich durch die koaxial aufgesetzte Anordnung der Verriegelungsspindel auf den Bremszylinder ein großer axialer Bauraumbedarf. Der Verriegelungsmechanismus ist auf dem Druckraum des Bremszylinders angeordnet, wodurch sich zusätzliche Abdichtprobleme ergeben. Die Verriegelungszeit ist zudem relativ lang, da die Verriegelungsspindel dem vollen Arbeitshub des Bremszylinders folgen muß.

Eine Feststellvorrichtung gemäß dem Oberbegriff des Anspruches 1 ist aus der WO 96/12634A bekannt. Die Klemmvorrichtung ist jedoch auf einem Ansatz des Membrantellers angeordnet. Dadurch ist der benötigte Bauraum für die Feststellvorrichtung entsprechend groß. Außerdem ist bei dieser Feststellvorrichtung keine Möglichkeit des Ausgleichs aufgrund des Schrumpfens in Folge einer Abkühlung gegeben.

Vor diesem Hintergrund setzt die Erfindung bei der Aufgabe an, eine Feststellbremsvorrichtung zu schaffen, mit der ein Parkbrems-Verriegelungsmechanismus für druckluftbetätigte Bremszylinder realisiert wird, der bei geringer Stellleistung und geringer Verriegelungsdauer eine zuverlässige stufenlose Verriegelung des Betätigungsstößels des Bremszylinders ermöglicht und dabei die Abmessungen des Bremszylinders, insbesondere dessen axiale Erstreckung nur geringfügig beeinflußt.

Die Erfindung löst diese Aufgabe durch Gegenstand des Anspruchs 1.

Die Erfindung realisiert eine Feststellbremsvorrichtung für pneumatisch betätigte Trommel- oder Scheibenbremsen mit einem pneumatisch betätigten, vorzugsweise als Membranzylinder ausgelegten, Betriebsbremszylinder mit einem Zylinderstößel zum Betätigen und Lösen der Trommel- oder Scheibenbremse, wobei auf den Zylinderstößel eine elektromechanisch angetriebene Klemmvorrichtung einwirkt, welche den Zylinderstößel umfaßt und dazu ausgelegt ist, bei Feststellbremsungen durch einen Formschluß den Zylinderstößel zu halten.

Die Klemmvorrichtung umfasst den Stößel des Bremszylinders und realisiert einen Formschluß, z.B. einen Gewindeeingriff.

Die Erfindung bewirkt bei nur geringem Bauraumbedarfund einer grundsätzlich kostengünstig realisierbaren konstruktiven Aufbau ein zuverlässiges Halten, insbesondere auch durch den leicht konischen Zylinderstößelschaft.

Vorzugsweise ist eine Einrichtung zur elektromechanischen Zustellung des Zylinderstößels an der Klemmvorrichtung ausgebildet. Die Erfindung bietet damit die Möglichkeit dazu, im verriegelten Zustand des Bremszylinders ein weiteres Zustellen desselben ausschließlich mittels des elektromechanischen Antriebes des Verriegelungssystems zu bewirken. Diese optionale Nachstellmöglichkeit wird dadurch erzielt, daß bei einer Ausführungsvariante mit Gewindeeingriff durch ein Kupplungssystem die Klemmeinrichtung als Stellgewindemutter in Umlauf versetzt wird und auf diese Weise ein weiteres rein elektromechanisch bewirktes Zustellen des Bremszylinders erfolgt.

Hierdurch wird es möglich, ein Ansteuerungsverfahren für eine Feststellbremsvorrichtung der vorstehend genannten Art zu realisieren, bei dem während einer Feststellbremsung folgende Steuerschritte durchlaufen werden: mit dem Betriebsbremszylinder wird die Bremse zugespannt, die Stellung der Zylinderstößel (3) wird durch eine Klemmvorrichtung fixiert, und durch Nachdrehen der Feststellbremsvorrichtung mit der Einrichtung zur elektromechanischen Zustellung des Zylinderstößels während der Feststellbremsung erfolgt ein Ausgleich von infolge Abkühlen der Bremse auftretenden Schrumpfungen insbesondere der Bremsscheibe und/oder der Bremsbeläge. Auf diese Weise ist es möglich, auch ohne Speicherfeder einen Ausgleich der Schrumpfungen beim Abkühlen der Bremse zu erreichen.

Vorteilhafte Ausgestaltungen der Erfindung sind den Unteransprüchen zu entnehmen.

Nachfolgend wird die Erfindung anhand von Ausführungsbeispielen unter Bezug auf die Figuren näher beschrieben. Es zeigt:
Fig. 1 einen ersten Schnitt durch ein erstes Ausführungsbeispiel der Erfindung;
Fig. 2 einen zweiten Schnitt durch das erste Ausführungsbeispiel der Erfindung;
Fig. 3 eine Draufsicht auf das erste Ausführungsbeispiel der Erfindung;
Fig. 4 einen Schnitt durch einen ersten Bereich eines zweiten Ausführungsbeispiels der Erfindung;
Fig. 5 einen Schnitt durch ein zweiten Bereich des zweiten Ausführungsbeispiels der Erfindung; und
Fig. 6 und 7 Flußdiagramme von Steuerverfahren für das Ausführungsbeispiel der Fig. 4 und 5.

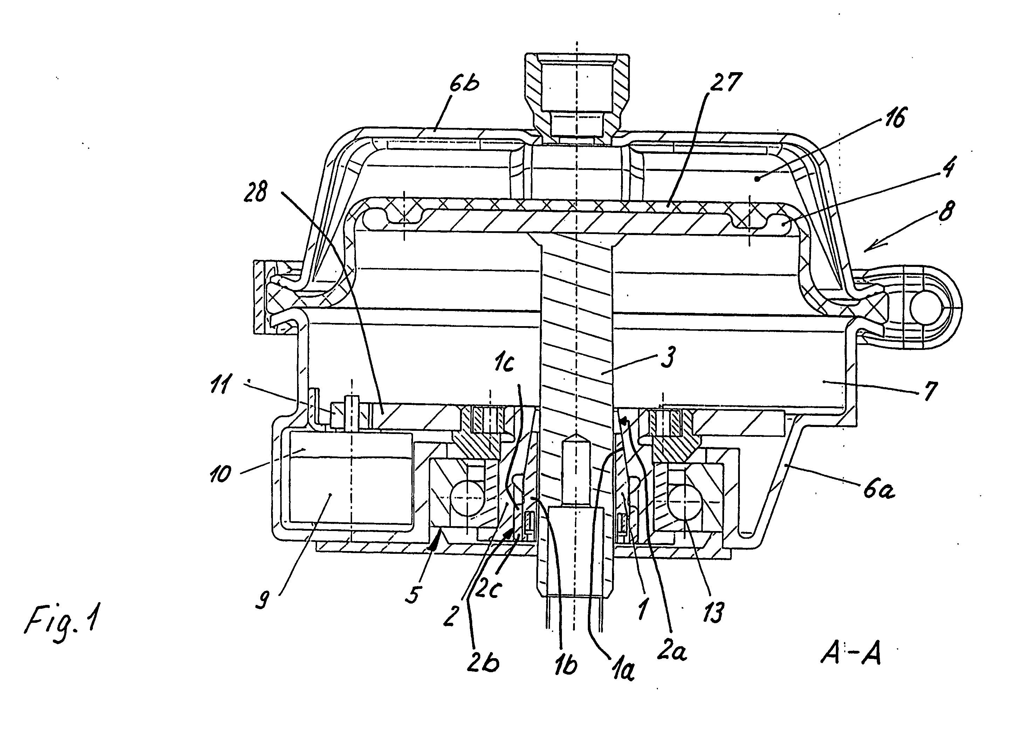

Fig. 1 zeigt einen Membranbremszylinder 8 mit einem hier zweiteiligen Gehäuse 6 mit Gehäuseteilen 6a und 6b, in welchem ein Membranteller 4 untergebracht ist, an welchem ein Zylinderstößel 3 zum Betätigen der Bremse in Betätigungsrichtung angeordnet ist.

Dem Membranteller 4 ist eine Membran 27 zugeordnet, welche einen Druckraum 16 abschließt, der zwischen der Membran 27 und dem oberen Teil 6b des zweiteiligen Gehäuses 6 ausgebildet ist.

Bei einer Feststellbremsbetätigung wird der Druckraum 16 des Bremszylinders 8 mit Druck beaufschlagt, wodurch der Zylinderstößel 3 linear bewegt wird, um eine hier nicht dargestellte Bremse - eine Nutzfahrzeugscheibenbremse in pneumatischer Betätigung - zuzuspannen.

Die Klemmvorrichtung 5 ist am unteren Teil 6a des Bremszylindergehäuses oder - körpers 6 auf der atmosphärisch belüfteten sog. Sekundärseite 7 des Bremszylinders 8 angeordnet.

Durch die flache Bauweise der Klemmvorrichtung 5 einer im Bremszylinder 8 seitlich angeordneten elektrischen Antriebsvorrichtung 9 - ein Elektromotor - wird die Bauhöhe des Bremszylinders 8 nur geringfügig beeinflusst.

Nach Fig. 1 weist die Klemmvorrichtung 5 eine inneren Konushülse 1 auf, welche auf dem Zylinderstößel 3 sitzt, und zwar innerhalb des Gehäuses 6 in dem vom Membranteller 4 abgewandten Bereich des Zylinderstößels 3.

Die innere Konushülse 1 weist einen konischen (Außen-)Bereich la und einen sich an den Konusbereich anschliessenden, im wesentlichen zylindrischen (Außen-)Bereich 1b auf.

Die innere Konushülse 1 greift mit ihrem konischen Bereich 1a in eine umhüllende äußere Konushülse 2 ein, die wiederum einen konischen (Innen-)Bereich 2a und einen zylindrischen (Innen-)Bereich 2b aufweist.

In ihrem zylindrischen Bereich 1b ist die innere Konushülse 1 mit einem Außengewinde 1c versehen, welches mit einem korrespondierenden Innengewinde 2c im zylindrischen Bereich 2b der äußeren Konushülse 2 kämmt.

Die innere Konushülse 1 ist zur Realisierung der im Betrieb erforderlichen Durchmesserveränderung mindestens einmal längs geschlitzt oder in mehrere Segmente unterteilt.

Der konische Bereich 1a ist - bezogen auf die Betätigungsrichtung des Zylinderstößels 3 - derart ausgelegt und angeordnet, daß bei einer Bewegung des Zylinderstößels 3 in Löserichtung, verursacht durch die rückstellenden Kräfte der Bremse, infolge der wirkenden Reibkräfte die innere Konushülse 1 in den Innenkonus 2a der äußeren Konushülse 2 hineingezogen wird, wodurch die Klemmkraft auf den Zylinderstößel 3 erhöht wird.

Um diesen Effekt noch weiter zu verstärken und damit quasi durch einen Formschluß ein ungewolltes Zurückweichen des Zylinderstößels 3 unter den Rückstellkräften der Bremse zu vermeiden, ist auch der Schaft des Zylinderstößels 3 konisch ausgebildet und zwar in der Weise, daß der Durchmesser des Zylinderstößels am unteren, dem Membranteller 4 abgewandten Ende größer ist als an dem oberen, in den Membranteller 4 übergehenden Ende. Auf diese Weise wird ein selbsttätiges Lösen der Bremse zuverlässig verhindert.

Der im Gehäuse 6 seitlich angeordnete Antriebsmotor 9, der in einer möglichen Ausführungsform über ein Untersetzungsgetriebe 10 verfügt, treibt über ein Abtriebsrad 11 mittels eines Zahnrad- oder Umschlingungsgetriebes 28 die äußere Konushülse 2 an.

Die äußere Konushülse 2 ist drehbar aber axial unverschiebbar in einer Lagerungsvorrichtung, z.B. einem Kugellager 13 gelagert.

Bei Drehungen des Antriebsmotors 9 und der daraus resultierenden Drehung der äußeren Konushülse 2 wird die innere Konushülse 1 durch den Gewindeeingriff 14 axial verstellt, da sie andererseits gegenüber dem Zylinderstößel 3 verdrehgesichert aber axial verschiebbar angeordnet ist.

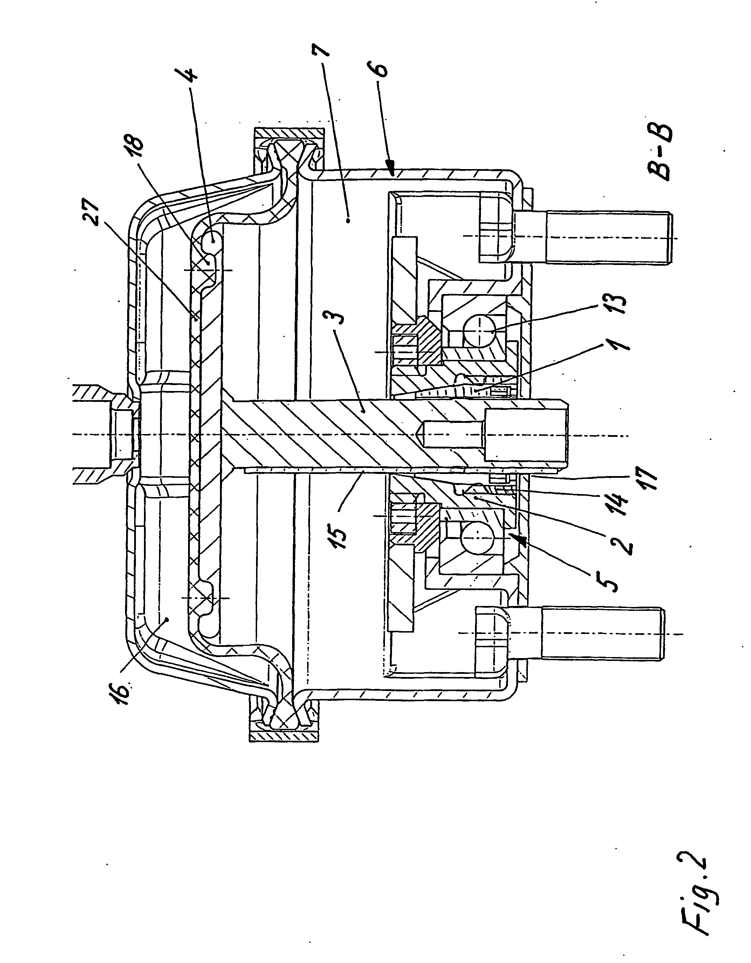

Die Verdrehsicherung wird nach Fig. 2 z.B. über mindestens eine axial verlaufende Rippe 15 auf dem Schaft des Zylinderstößels 3 bewirkt, die wiederum in die Lücke zwischen den Klemmsegmenten bzw. in den Trennschlitz bei einer nur einmal geschlitzten inneren Konushülse 1 eingreift.

Der Zylinderstößel 3 ist wiederum gegen die feststehenden Bauteile des Bremszylinders 8 gegen Verdrehen gesichert. Hierzu greift vorzugsweise die mindestens eine axiale Rippe 15 auf dem Zylinderstößel 3 in eine Nut 17 in der Durchgangsöffnung des Bremszylinderkörpers 6 ein.

Es sind auch andere Verdrehsicherungen möglich, z.B. über Noppen 18 an der Membran 27, die zugleich in entsprechende Vertiefungen des Membrantellers 4 eingreifen.

Eine andere Ausführungsform der Verdrehsicherung besteht darin, daß das untere, dem Membranteller 4 abgewandte Ende der inneren Konushülse 1 mit einem nicht kreisförmigen Profil in eine entsprechend komplementär geformte Durchgangsöffnung in den Boden des Bremszylinderkörpers 6 eingreift.

Durch die axiale Verstellung wird die innere Konushülse 1 je nach Drehrichtung der äußeren Konushülse 2 in deren Innenkonus hineingezogen oder von dieser weg bewegt.

Die Wirkungsweise dieser Vorrichtung ist wie folgt:

Bei einer Feststellbremsbetätigung wird der Druckraum 16 des Bremszylinders 8 mit Druck beaufschlagt, wodurch der Membranteller 4 und der Zylinderstößel 3 zum Betätigen der Bremse in Betätigungsrichtung verschoben werden. Dabei ist die Klemmvorrichtung 5 in Lösestellung.

Wenn der Bremszylinder, z.B. nach einer vorgegebenen Zeitspanne die Einbremsposition erreicht hat, wird der Antriebsmotor 9 im Sinne eines Zuspannens der Klemmvorrichtung, d.h. Hineinziehen des inneren Konus 1 in den äußeren Konus 2 angetrieben. Nach Erreichen des Klemmzustandes, welcher z.B. durch die Stromaufnahme oder den Drehzahlzustand des Antriebsmotors 9 erfaßt wird, wird der Antriebsmotor 9 stromlos geschaltet und es ist ein zuverlässiges Halten des Bremszylinders in der Parkbremsposition erreicht.

Zum Lösen der Parkbremse wird vorzugsweise der Bremszylinder 8 wiederum mit Druck beaufschlagt. Hierdurch wird die Klemmvorrichtung 5 wieder kraftlos geschaltet, wodurch ein Lösen mit nur geringen Reibwiderständen möglich ist.

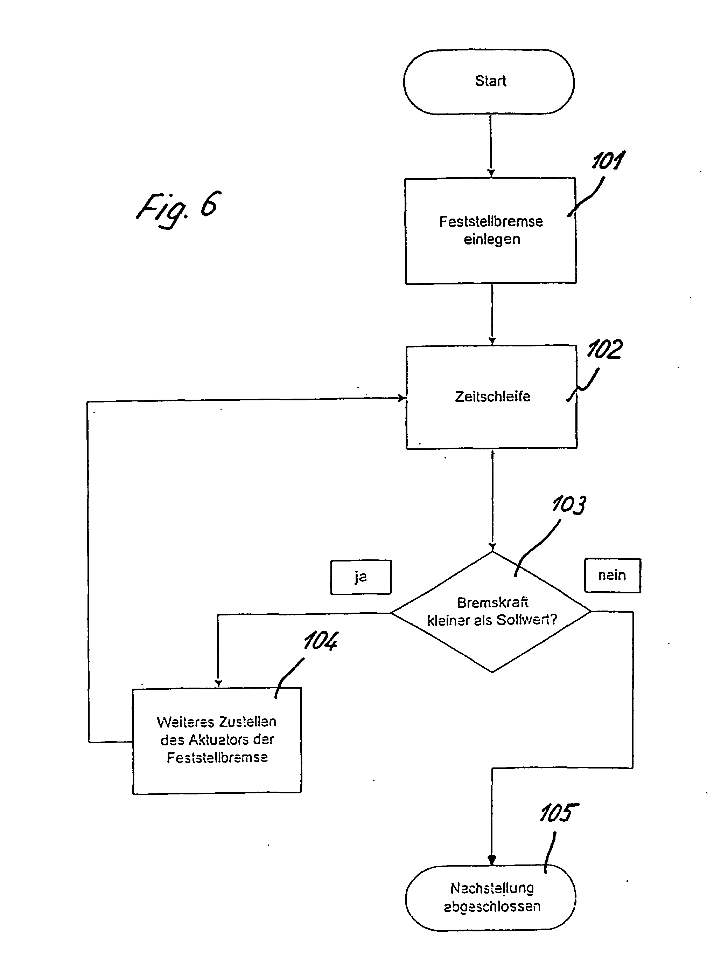

Fig. 4 und 5 zeigen eine Ausführungsvariante der Erfindung, welche mit einer zusätzlichen Einrichtung zur elektromechanischen Zustellung des Zylinderstößels 3 versehen ist.

Nach Fig. 4 und 5 sind der Schaft des Zylinderstößels 3 und die zugeordnete innere Zylinderfläche der inneren Konushülse 1 zur Erzielung eines Formschlusses und der Zustellmöglichkeit hierzu jeweils mit korrespondierenden Innen- und Außengewinden 29a, b versehen, welche vorzugsweise als Rundgewinde ausgebildet sind.

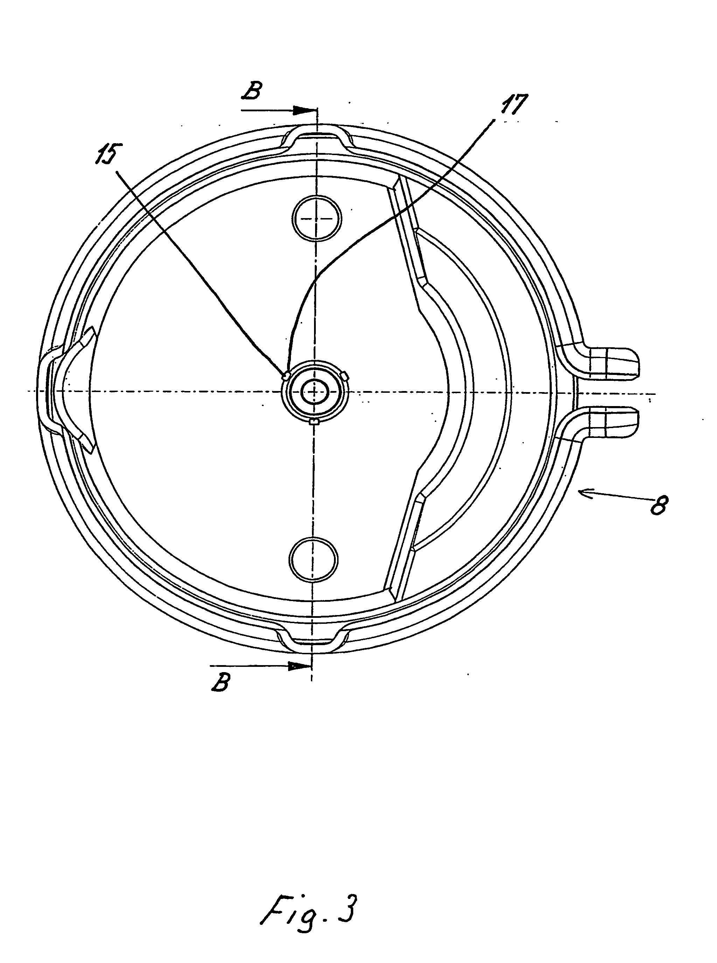

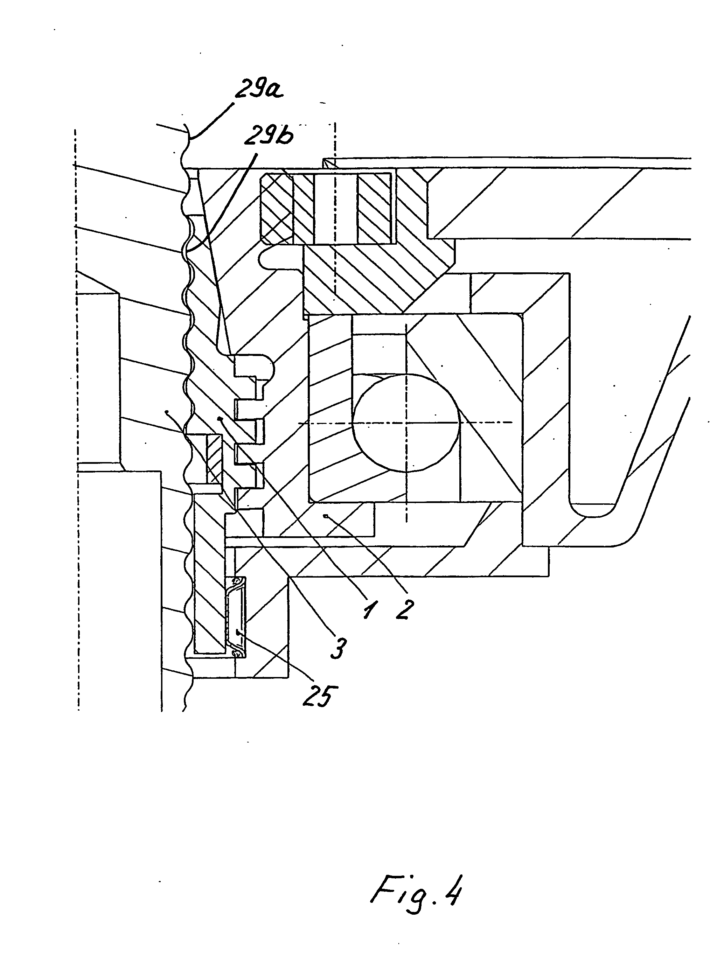

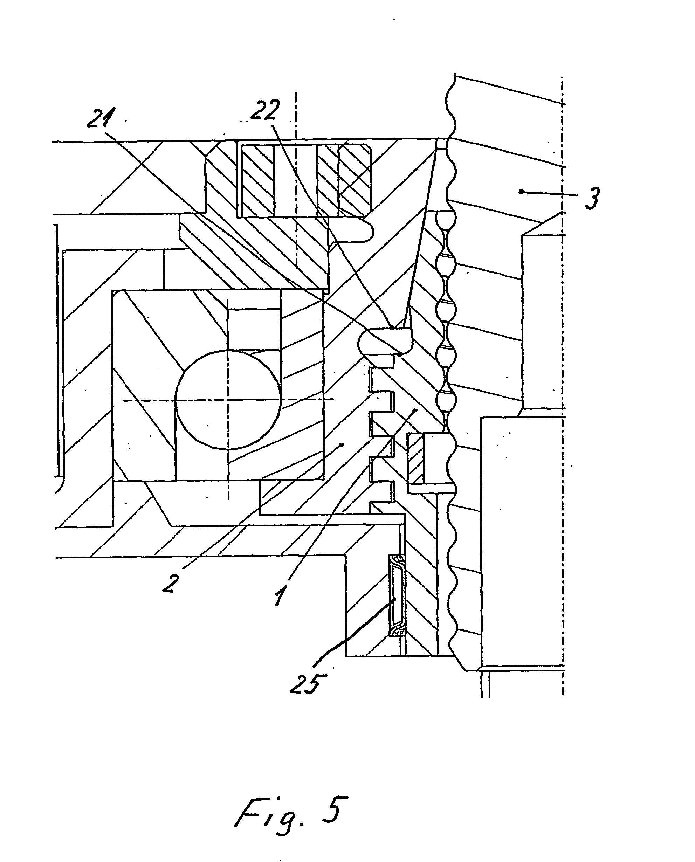

Diese Variante erfordert einen größeren Stellhub im Klemmechanismus als das Ausführungsbeispiel der Fig. 1 bis 3, da zum Lösen der Feststellbremse die innere Konushülse aus dem Gewindeeingriff gebracht werden muß.

Es ergibt sich jedoch der Vorteil des rein formschlüssigen Haltens des Zylinderstößels und insbesondere der Vorteil, daß in der Parkbremsstellung ein Zustellen des Bremszylinders über die elektromechanische Betätigung möglich ist, um Schrumpfungsvorgänge einer abkühlenden Bremse auszugleichen.

Das Einlegen und Lösen der "Feststellbremse" erfolgt bei dieser Ausführungsform auf die eingangs beschriebene Art und Weise.

Über die elektrische Antriebsvorrichtung 9 wird die äußere Konushülse 2 so weit angetrieben und die innere Konushülse 1 so weit verschoben, bis sie mit der Anschlagschulter 21 - siehe Fig. 5 - an der entgegengesetzten Anschlagschulter 22 der äußeren Konushülse zur Anlage kommt. In dieser Position befindet sich das Muttergewinde 29a der inneren Konushülse 1 mit dem Außengewinde 29b des Zylinderstößels 3 im Eingriff.

Es ist dabei zur Erzielung der Haltewirkung kein Klemmen erforderlich, da das Gewinde 29 selbsthemmend ausgelegt ist. Wenn diese Anschlagposition erreicht ist, was durch die Stromaufnahme des Antriebsmotors bzw. dessen Drehzahlverhalten erkennbar ist, wird der Antriebsmotor stromlos geschaltet und es ist ein zuverlässiges Halten der Parkbremsstellung der Bremse erreicht.

Wird nun ein Abfall der Zuspannkraft der Bremse z.B. infolge von Schrumpfungsvorgängen einer abkühlenden Bremse erkannt, wird über die elektronische Steuerung der Antriebsmotor wieder eingeschaltet. Bei weiterer Drehung der äußeren Konushülse 2 ist die innere Konushülse 1 in ihrer axialen Verschiebbarkeit blockiert. Dies führt nun zu einem Strom- und Drehmomentanstieg des Antriebsmotors 9. Es wird nun die innere Konuskupplung 1 gegen den an ihrem unteren Ende über Klemmkräfte gehaltenen Verdrehsicherungsring 25 durchgedreht. Der Verdrehsicherungsring wirkt somit als Rutschkupplung und die innere Konushülse 1 und die äußere Konushülse 2 drehen nun gemeinsam. Bei dieser weiteren Drehung wird nun der Zylinderstößel 3 infolge des Schraubeingriffes zwischen innerer Konushülse 1 und Zylinderstößel 3 im Sinne eines weiteren Zuspannens der Bremse betätigt bis wieder die erforderliche Zuspannkraft an der Bremse hergestellt ist.

Mit dieser Vorrichtung ist es auch möglich, bei entsprechend längerer Stellzeit, die Feststellbremse ausschließlich elektromechanisch zuzuspannen und zu lösen.

Der Verdrehsicherungsring 25 ist als ringförmiges Federelement nach Art eines Toleranzringes ausgeführt.

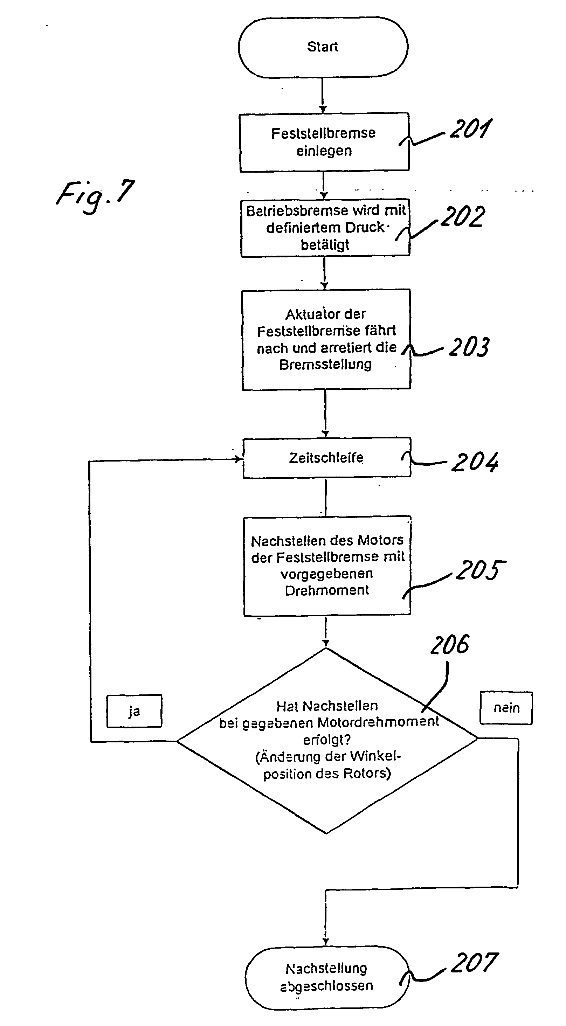

Die Ansteuerung der Variante nach Fig. 4 und 5 lässt sich wie in Fig. 6 und 7 dargestellt wie folgt realisieren:

Figur 6 zeigt ein erstes Ansteuerungsverfahren. Nach dem Start der Feststellbremsung wird die Feststellbremse eingelegt (Steuerschritt 101), woraufhin eine Zeitschleife (Steuerschritt 102) gestartet wird, in der zunächst (Steuerschritt 103) überprüft wird, ob die Bremskraft kleiner als ein Sollwert ist. Ist dies der Fall, erfolgt ein weiteres Zustellen des Aktuators der Feststellbremse (Steuerschritt 104). Andernfalls ist der Nachstellvorgang abgeschlossen (Steuerschritt 105). Gegebenenfalls kann diese Zeitschleife nach einem vorgegebenen Zeitraum erneut gestartet werden.

Nach Figur 7 erfolgt nach einem Start der Routine zunächst ein Einlegen der Feststellbremse (Steuerschritt 201), wobei die Betriebsbremse mit definiertem Druck betätigt wird (Steuerschritt 202), woraufhin der elektromotorische Aktuator der Feststellbremse nachfährt und die Bremsstellung arretiert (Steuerschritt 203). Danach wird eine Zeitschleife zum Nachstellen gestartet (Steuerschritt 204), welche ein Nachstellen des Motors der Feststellbremse mit vorgegebenem Drehmoment (Steuerschritt 205) initiiert. Daraufhin wird eine Änderung der Winkelposition des Rotors ermittelt (Steuerschritt 206), um zu entscheiden, ob ein Nachstellen bei dem vorgegebenen Motordrehmoment erfolgt ist. Ist dies der Fall, wird die Zeitschleife im Steuerschritt 204 erneut gestartet. Ist dies nicht der Fall, ist der Nachstellvorgang abgeschlossen und die Routine wird gestoppt (Steuerschritt 207).

### Bezugszeichenliste

- innere Konushülse: 1
- konischer Bereich: 1a
- Zylindrischer Bereich: 1b
- Außengewinde: 1c
- Konushülse: 2
- konischer (Innen)Bereich: 2a
- zylindrischer Bereich: 2b
- Innengewinde: 2c
- Zylinderstößel: 3
- Membranteller: 4
- Klemmvorrichtung: 5
- Gehäuse: 6
- Gehäuseteile: 6a, 6b
- Sekundärseite: 7
- Membranbremszylinder: 8
- Antriebsvorrichtung: 9
- Untersetzungsgetriebe: 10
- Abtriebsrad: 11
- Drehspindel: 12
- Kugellager: 13
- Gewindeeingriff: 14
- Rippe: 15
- Druckraum: 16
- Nut: 17
- Noppen: 18
- Anschalgschulter: 21
- Anschlagschulter: 22
- Verdrehsicherungsring: 25
- Membran: 27
- Gewinde: 29
- Muttergewinde: 29a
- Außengewinde: 29b

## Patentansprüche

1. Feststellbremsvorrichtung für pneumatisch betätigte Trommel- oder Scheibenbremsen mit
a) einem pneumatisch betätigten und als Membranzylinder ausgelegten Betriebsbremszylinder (1) mit einem Gehäuse (6), in dem ein Membranteller (4) angeordnet ist, an dem ein Zylinderstößel (3) zum Betätigen und Lösen der Trommel- oder Scheibenbremse befestigt ist,
b) einer elektromechanisch angetriebenen Klemmvorrichtung für Feststellbremsungen , mit einem Elektromotor (9) als Antrieb,
**dadurch gekennzeichnet, dass**
c) die elektromechanisch angetriebene Klemmvorrichtung (5) den Zylinderstößel (3) des Membranzylinders umfasst und diesen bei Feststellbremsungen durch einen Formschluss hält.

2. Feststellbremsvorrichtung nach Anspruch 1, **dadurch gekennzeichnet, daß** die Klemmvorrichtung (5) eine innere Konushülse (1) aufweist, welche auf dem Zylinderstößel (3) sitzt und die vorzugsweise einen konischen Bereich (1a) und einen sich an den Konusbereich anschließenden, zylindrischen Bereich (1b) aufweist.

3. Feststellbremsvorrichtung nach Anspruch 2, **dadurch gekennzeichnet, daß** die innere Konushülse (1) mit ihrem konischen Bereich (1a) in eine umhüllende äußere Konushülse (2) eingreift, die wiederum vorzugsweise einen konischen Bereich (2a) und einen zylindrischen Bereich (2b) aufweist.

4. Feststellbremsvorrichtung nach Anspruch 2 oder 3, **dadurch gekennzeichnet, daß** die innere Konushülse (1) mit einem Außengewinde (1c) versehen ist, welches mit einem korrespondierenden Innengewinde (2c) der äußeren Konushülse (2) kämmt.

5. Feststellbremsvorrichtung nach einem der Ansprüche 2 bis 4, **dadurch gekennzeichnet, daß** die innere Konushülse (1) mindestens einmal längs geschlitzt ausgebildet oder in mehrere Segmente unterteilt ist.

6. Feststellbremsvorrichtung nach einem der vorstehenden Ansprüche 3 bis 5, **dadurch gekennzeichnet, daß** der konische Bereich (1a) der inneren Konushülse (1) derart ausgelegt und angeordnet ist, daß bei einer Bewegung des Zylinderstößels (3) in Löserichtung infolge der wirkenden Reibkräfte die innere Konushülse (1) in den Innenkonus (2a) der äußeren Konushülse (2) hineingezogen wird, wodurch die Klemmkraft auf den Zylinderstößel (3) erhöht wird.

7. Feststellbremsvorrichtung nach einem der vorstehenden Ansprüche, **dadurch gekennzeichnet, daß** der Schaft des Zylinderstößels (3) derart konisch ausgebildet ist, daß der Durchmesser des Zylinderstößels (3) am unteren, dem Membranteller abgewandten Ende größer ist als im oberen, in den Membranteller (4) übergehenden Bereich.

8. Feststellbremsvorrichtung nach einem der vorstehenden Ansprüche 3 bis 7, **dadurch gekennzeichnet, daß** die äußere Konushülse (2) drehbar aber axial unverschiebbar in einer Lagerungsvorrichtung (13) gelagert ist. ,

9. Feststellbremsvorrichtung nach einem der vorstehenden Ansprüche 2 bis 8, **dadurch gekennzeichnet, daß** die innere Konushülse (1) relativ zum Zylinderstößel (3) verdrehgesichert aber axial verschiebbar angeordnet ist.

10. Feststellbremsvorrichtung nach einem der vorstehenden Ansprüche 2 bis 9, **dadurch gekennzeichnet, daß** eine axial verlaufende Rippe (15) auf dem Schaft des Zylinderstößels (3) angeordnet ist, welche in eine Lücke zwischen Klemmsegmenten oder dem Trennschlitz der Konushülse (1) eingreift.

11. Feststellbremsvorrichtung nach Anspruch 10, **dadurch gekennzeichnet, daß** die Rippe (15) auf dem Zylinderstößel (3) in eine Nut (17) in der Durchgangsöffnung des Bremszylinderkörpers (6) eingreift.

12. Feststellbremsvorrichtung nach einem der vorstehenden Ansprüche, **dadurch gekennzeichnet, daß** der Zylinderstößel (3) relativ zu dem feststehenden Bauteil des Bremszylinders verdrehgesichert ist.

13. Feststellbremsvorrichtung nach einem der vorstehenden Ansprüche, **dadurch gekennzeichnet, daß** der Elektromotor (9) über Untersetzungsgetriebe und/oder ein Abtriebsrad (11) vorzugsweise mittels eines Zahnrad- oder Umschlingungsgetriebes (28) eine äußere Konus00hülse (2) antreibt.

14. Feststellbremsvorrichtung nach einem der vorstehenden Ansprüche, **dadurch gekennzeichnet, daß** Noppen (18) an der Membran (27) in Vertiefungen des Membrantellers (4) eingreifen.

15. Feststellbremsvorrichtung nach einem der vorstehenden Ansprüche 2 bis 14, **dadurch gekennzeichnet, daß** das untere, dem Membranteller (4) abgewandte Ende der inneren Konushülse (1) mit einem nicht kreisförmigen Profil in eine entsprechende komplementär geformte Durchgangsöffnung im Boden des Bremszylinderkörpers (6) eingreift.

16. Feststellbremsvorrichtung nach einem der vorstehenden Ansprüche, **dadurch gekennzeichnet, daß** eine Einrichtung zur elektromechanischen Zustellung des Zylinderstößels (3) an der Klemmvorrichtung (5) ausgebildet ist.

17. Feststellbremsvorrichtung nach einem der vorstehenden Ansprüche 2 bis 16, **dadurch gekennzeichnet, daß** der Schaft des Zylinderstößels (3) und die zugeordnete innere Zylinderfläche der inneren Konushülse (1) mit korrespondierenden Innen-und Außengewinden (29a, 29b), vorzugsweise Rundgewinden, versehen sind.

18. Feststellbremsvorrichtung nach einem der vorstehenden Ansprüche, **dadurch gekennzeichnet, daß** die innere Konushülse eine Anschlagschulter (21) aufweist, welche mit einer entgegengesetzten Anschlagschulter (22) an der äußeren Konushülse (2) in Anlage bringbar ist.

19. Feststellbremsvorrichtung nach einem der vorstehenden Ansprüche, **dadurch gekennzeichnet, daß** mit Hilfe eines Kupplungssystems die Klemmeinrichtung als Stellgewindemutter in Umlauf versetzbar ist.

20. Feststellbremsvorrichtung nach einem der vorstehenden Ansprüche 2 bis 19, **dadurch gekennzeichnet, daß** die innere Konushülse (1) am unteren Ende mit einem Verdehsicherungsring (25), der als Rutschkupplung wirkt, versehen ist.

21. Feststellbremsvorrichtung nach Anspruch 20, **dadurch gekennzeichnet, daß** der Verdrehsicherungsring (25) als ringförmiges Federelement nach Art eines Toleranzringes ausgeführt ist.

22. Feststellbremsvorrichtung nach einem der vorstehenden Ansprüche, **dadurch gekennzeichnet, daß** eine elektronische Nachstelleinrichtung eine mit dem Elektromotor (9) verbundene Steuereinrichtung umfaßt, die dazu ausgelegt ist, den Elektromotor (9) mit unterschiedlichen Drehzahlen zu betreiben.

23. Ansteuerungsverfahren für eine Feststellbremsvorrichtung nach einem der vorstehenden Ansprüche, **gekennzeichnet durch** folgende bei einer Feststellbremsung zu durchlaufende Steuerschritte:
A) mit dem Betriebsbremszylinder wird die Bremse zugespannt,
B) die Stellung der Zylinderstößel (3) wird **durch** eine Klemmvorrichtung fixiert, und
C) **durch** Nachdrehen der Feststellbremsvorrichtung mit der Einrichtung zur elektromechanischen Zustellung des Zylinderstößels (3) während der Feststellbremsung erfolgt ein Ausgleich von infolge Abkühlen der Bremse auftretenden Schrumpfungen insbesondere der Bremsscheibe und/oder der Bremsbeläge.

## Claims

1. Parking brake device for pneumatically actuated drum or disc brakes, with
a) a pneumatically actuated operating brake cylinder (1) designed as a membrane cylinder, with a housing (6) in which is arranged a membrane disc (4) to which is attached a cylinder plunger (3) for applying and releasing the drum or disc brake,
b) an electro-mechanically driven clamping device for parking braking, with an electric motor (9) as its drive,
**characterised in that**
c) the electro-mechanically driven clamping device (5) surrounds the cylinder plunger (3) of the membrane cylinder and holds it by positive interlock while the parking brake is applied.

2. Parking brake device according to Claim 1, **characterised in that** the clamping device (5) comprises an inner conical sleeve (1) which surrounds the cylinder plunger (3) and which preferably comprises a conical portion (1a) and adjacent to the conical portion a cylindrical portion (1b).

3. Parking brake device according to Claim 2, **characterised in that** the inner conical sleeve (1) engages with its conical portion (1a) in a surrounding outer conical sleeve (2), which again preferably comprises a conical portion (2a) and a cylindrical portion (2b).

4. Parking brake device according to Claims 2 or 3, **characterised in that** the inner conical sleeve (1) is provided with an outer thread (1c), which meshes with a corresponding inner thread (2c) of the outer conical sleeve (2).

5. Parking brake device according to any of Claims 2 to 4, **characterised in that** the inner conical sleeve (1) is formed with at least one longitudinal slit or is divided into several segments.

6. Parking brake device according to any of the preceding Claims 3 to 5, **characterised in that** the conical portion (1a) of the inner conical sleeve (1) is designed and arranged such that when the cylinder plunger (3) moves in the release direction, as a result of the friction forces acting the inner conical sleeve (1) is drawn into the inner cone (2a) of the outer conical sleeve (2), whereby the clamping force on the cylinder plunger (3) is increased.

7. Parking brake device according to any of the preceding claims, **characterised in that** the shaft of the cylinder plunger (3) is made conical, with its diameter at the lower end away from the membrane disc larger than its diameter at the upper end connected to the membrane disc (4).

8. Parking brake device according to any of the preceding Claims 3 to 7, **characterised in that** the outer conical sleeve (2) is fitted in a bearing device (13) and is able to rotate but not able to move axially.

9. Parking brake device according to any of the preceding Claims 2 to 8, **characterised in that** the inner conical sleeve (1) is rotationally fixed relative to the cylinder plunger (3) but can move axially.

10. Parking brake device according to any of the preceding Claims 2 to 9, **characterised in that** an axial rib 15 is arranged on the shaft of the cylinder plunger (3), which engages in a gap between clamp segments or in the parting slit of the conical sleeve (1).

11. Parking brake device according to Claim 10, **characterised in that** the rib (15) on the cylinder plunger (3) engages in a groove (17) in the through-aperture of the brake cylinder body (6).

12. Parking brake device according to any of the preceding claims, **characterised in that** the cylinder plunger (3) is rotationally fixed relative to the fixed components of the brake cylinder.

13. Parking brake device according to any of the preceding claims, **characterised in that** the electric motor (9) drives an outer conical sleeve (2) by means of a reduction gear and/or a drive output wheel (11), preferably via a gearwheel or belt transmission (28).

14. Parking brake device according to any of the preceding claims, **characterised in that** protrusions (18) on the membrane (27) engage in recesses of the membrane disc (4).

15. Parking brake device according to any of the preceding Claims 2 to 14, **characterised in that** the lower end of the inner conical sleeve (1) facing away from the membrane disc (4) engages with a non-circular profile in a corresponding through-aperture of complementary shape in the bottom of the brake cylinder body (6).

16. Parking brake device according to any of the preceding claims, **characterised in that** a device for the electro-mechanical adjustment of the cylinder plunger (3) is formed on the clamping device (5).

17. Parking brake device according to any of the preceding Claims 2 to 16, **characterised in that** the shaft of the cylinder plunger (3) and the associated inner cylinder surface of the inner conical sleeve (1) are provided with corresponding inner and outer threads (29a, 29b), preferably rounded threads.

18. Parking brake device according to any of the preceding claims, **characterised in that** the inner conical sleeve has an abutment shoulder (21), which can be brought into contact with an opposed abutment shoulder (22) on the outer conical sleeve (2).

19. Parking brake device according to any of the preceding claims, **characterised in that** with the help of a coupling system, the clamping device can be rotated as a threaded nut for adjustment.

20. Parking brake device according to any of the preceding Claims 2 to 19, **characterised in that** the inner conical sleeve (1) is provided at its lower end with a rotation securing ring (25), which acts as a friction clutch.

21. Parking brake device according to Claim 20, **characterised in that** the rotation securing ring (25) is formed as an annular spring element in the manner of a tolerance ring.

22. Parking brake device according to any of the preceding claims, **characterised in that** an electronic adjustment device comprises a control unit connected to the electric motor (9), which is designed to operate the electric motor (9) at various speeds.

23. Control method for a parking brake device according to any of the preceding claims, **characterised by** the following control steps carried out when the parking brake is applied:
A) the brake is applied by the operating brake cylinder,
B) the position of the cylinder plunger (3) is fixed by a clamping device, and
C) by subsequently following the parking brake device by means of the device for the electro-mechanical adjustment of the cylinder plunger (3) while the parking brake is applied, contraction that occurs as a result of brake cooling, in particular of the brake disc and/or the brake linings, is compensated.

## Revendications

1. Système de frein de stationnement pour des freins à disque ou à tambour à actionnement pneumatique, comportant
a) un cylindre (8) de frein de service actionné pneumatiquement et conçu comme cylindre à membrane, ayant un boîtier (6) dans lequel est disposé un disque de membrane (4) sur lequel est fixé un poussoir (3) cylindrique pour actionner et desserrer le frein à disque ou à tambour,
b) un dispositif de serrage à entraînement électromécanique pour des freinages de stationnement, ayant un moteur (9) électrique comme entraînement,
**caractérisé en ce que**
c) le dispositif (5) de serrage à entraînement électromécanique entoure le poussoir (3) cylindrique du cylindre à membrane et le maintient par un engagement à complémentarité de forme lors de freinages de stationnement.

2. Système de frein de stationnement suivant la revendication 1, **caractérisé en ce que** le dispositif (5) de serrage comporte une douille (1) conique intérieure, qui est montée sur le poussoir (3) cylindrique et qui comprend de préférence une région (1a) conique et une région (1b) cylindrique se raccordant à la région conique.

3. Système de frein de stationnement suivant la revendication 2, **caractérisé en ce que** la douille (1) conique intérieure s'engage par sa région (1a) conique dans une douille (2) conique extérieure enveloppante, qui comprend à nouveau une région (2a) conique et une région (2b) cylindrique.

4. Système de frein de stationnement suivant la revendication 2 ou 3, **caractérisé en ce que** la douille (1) conique intérieure est pourvue d'un filetage (1c) extérieur qui engrène avec un taraudage (2c) intérieur correspondant de la douille (2) conique extérieure.

5. Système de frein de stationnement suivant l'une des revendications 2 à 4, **caractérisé en ce que** la douille (1) conique intérieure est réalisée en étant fendue longitudinalement au moins une fois, ou est subdivisée en plusieurs segments.

6. Système de frein de stationnement suivant l'une des revendications précédentes 3 à 5, **caractérisé en ce que** la région (1a) conique de la douille (1) conique intérieure est conçue et disposée de telle sorte que, lors d'un déplacement du poussoir (3) cylindrique dans la direction de desserrage, la douille (1) conique intérieure est, du fait des forces de friction agissantes, rentrée dans le cône (2a) intérieur de la douille (2) conique extérieure, de sorte que la force de serrage exercée sur le poussoir (3) cylindrique est augmentée.

7. Système de frein de stationnement suivant l'une des revendications précédentes, **caractérisé en ce que** le corps du poussoir (3) cylindrique est réalisé conique de telle sorte que le diamètre du poussoir (3) cylindrique est plus grand à l'extrémité inférieure, éloignée du disque de membrane, que dans la région supérieure se poursuivant par le disque (4) de membrane.

8. Système de frein de stationnement suivant l'une des revendications précédentes 3 à 7, **caractérisé en ce que** la douille (2) conique extérieure est montée à rotation mais en fixité axiale dans un ensemble (13) de palier.

9. Système de frein de stationnement suivant l'une des revendications précédentes 2 à 8, **caractérisé en ce que** la douille (1) conique intérieure est disposée en étant bloquée en rotation mais axialement mobile par rapport au poussoir (3) cylindrique.

10. Système de frein de stationnement suivant l'une des revendications précédentes 2 à 9, **caractérisé en ce qu'**une nervure (15) s'étendant axialement est disposée sur le corps du poussoir (3) cylindrique, nervure qui s'engage dans une lacune entre des segments de serrage ou dans la fente de séparation de la douille (1) conique.

11. Système de frein de stationnement suivant la revendication 10, **caractérisé en ce que** la nervure (15) prévue sur le poussoir (3) cylindrique s'engage dans une rainure (17) dans l'ouverture de passage du corps (6) de cylindre de frein.

12. Système de frein de stationnement suivant l'une des revendications précédentes, **caractérisé en ce que** le poussoir (3) cylindrique est bloqué en rotation par rapport à l'élément fixe du cylindre de frein.

13. Système de frein de stationnement suivant l'une des revendications précédentes, **caractérisé en ce que** le moteur (9) électrique entraîne, par l'intermédiaire d'une transmission démultiplicatrice et/ou d'une roue (11) de sortie, de préférence au moyen d'une transmission (28) à engrenages ou à enroulement, une douille (2) conique extérieure.

14. Système de frein de stationnement suivant l'une des revendications précédentes, **caractérisé en ce que** des bossages (18) sur la membrane (27) s'engagent dans des renfoncements du disque (4) de membrane.

15. Système de frein de stationnement suivant l'une des revendications précédentes 2 à 14, **caractérisé en ce que** l'extrémité inférieure, éloignée du disque (4) de membrane, de la douille (1) conique intérieure s'engage par un profil non circulaire dans une ouverture de passage de forme complémentaire correspondante dans le fond du corps (6) de cylindre de frein.

16. Système de frein de stationnement suivant l'une des revendications précédentes, **caractérisé en ce qu'**un dispositif pour le rattrapage de jeu électromécanique du poussoir (3) cylindrique est formé sur le dispositif (5) de serrage.

17. Système de frein de stationnement suivant l'une des revendications précédentes 2 à 16, **caractérisé en ce que** le corps du poussoir (3) cylindrique et la surface cylindrique intérieure associée de la douille (1) conique intérieure sont pourvus de filetages (29a, 29b) intérieur et extérieur correspondants, de préférence de filetages ronds.

18. Système de frein de stationnement suivant l'une des revendications précédentes, **caractérisé en ce que** la douille conique intérieure comporte un épaulement (21) de butée qui peut être amené en application avec un épaulement (22) de butée opposé sur la douille (2) conique extérieure.

19. Système de frein de stationnement suivant l'une des revendications précédentes, **caractérisé en ce que**, à l'aide d'un système d'accouplement, le dispositif de serrage peut être mis en mouvement en tant qu'écrou fileté mobile.

20. Système de frein de stationnement suivant l'une des revendications précédentes 2 à 19, **caractérisé en ce que** la douille (1) conique intérieure est pourvue à l'extrémité inférieure d'une bague (25) de blocage en rotation qui agit comme accouplement à friction.

21. Système de frein de stationnement suivant la revendication 20, **caractérisé en ce que** la bague (25) de blocage en rotation est réalisée sous la forme d'un élément formant ressort annulaire, à la manière d'une bague de compensation de tolérances.

22. Système de frein de stationnement suivant l'une des revendications précédentes, **caractérisé en ce qu'**un dispositif électronique de rattrapage de jeu comprend un dispositif de commande relié au moteur (9) électrique, qui est conçu pour faire fonctionner le moteur (9) électrique à différentes vitesses de rotation.

23. Procédé de commande d'un système de frein de stationnement suivant l'une des revendications précédentes, **caractérisé par** les étapes de commande suivantes à suivre lors d'un freinage de stationnement :
A) le frein est appliqué au moyen du cylindre de frein de service,
B) la position du poussoir (3) cylindrique est immobilisée par un dispositif de serrage, et
C) par la rectification du système de frein de stationnement au moyen du dispositif pour le rattrapage de jeu électromécanique du poussoir (3) cylindrique pendant le freinage de stationnement, il se produit une compensation de retraits, notamment du disque de frein et/ou des garnitures de frein, qui apparaissent par suite du refroidissement du frein.
